# EUROPEAN PATENT SPECIFICATION

(11) **EP 3 337 286 B1**
(45) Date of publication and mention of the grant of the patent: **12.01.2022**
(21) Application number: 15903839.7
(22) Date of filing: 16.09.2015
(51) Int. Cl.: H04W 76/30, H04W 76/27, H04W 76/19

(54) **METHOD AND APPARATUS FOR RELEASING RADIO RESOURCE CONTROL (RRC) CONNECTION**
VERFAHREN UND VORRICHTUNG ZUR FREIGABE EINER FUNKRESSOURCENSTEUERUNGSVERBINDUNG
PROCÉDÉ ET APPAREIL DE LIBÉRATION DE CONNEXION À COMMANDE DE RESSOURCE RADIO (RRC)

(43) Date of publication of application: 20.06.2018
(73) Proprietor: Huawei Technologies Co., Ltd., Longgang District Shenzhen, Guangdong 518129 (CN)
(72) Inventor: ZHANG, Hongping, Shenzhen Guangdong 518129 (CN); YAN, Le, Shenzhen Guangdong 518129 (CN); DAI, Mingzeng, Shenzhen Guangdong 518129 (CN); ZENG, Qinghai, Shenzhen Guangdong 518129 (CN); LIU, Jing, Shenzhen Guangdong 518129 (CN)
(74) Representative: Epping - Hermann - Fischer
(86) International application number: PCT/CN2015/089708
(87) International publication number: WO 2017/045149

(56) References cited:
- EP-A1- 2 557 890
- WO-A1-2014/205779
- CN-A- 104 378 777
- CN-A- 104 812 070
- US-A1- 2014 219 248
- ERICSSON: "Update to the Signaling reduction for UE state transitions solution", 3GPP DRAFT; S2-152952_WASS2-152885_WAS152738_S2_110AH_ FS_AE_CIOT_SR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. SA WG2, no. Sophia-Antipolis, France; 20150831 - 20150904 3 September 2015 (2015-09-03), XP051034647, Retrieved from the Internet: URL:http://www.3gpp.org/ftp/tsg_sa/WG2_Arc h/TSGS2_110AH_Sophia/Docs/ [retrieved on 2015-09-03]
- '3GPP' 3GPP TS 36.523-1 V8.3.2 31 October 2009, XP009504504
- None

## Description

### TECHNICAL FIELD

The present invention relates to the field of communications technologies, and in particular, to an RRC (Radio Resource Control, radio resource control) connection releasing method and an apparatus.

### BACKGROUND

UE (User Equipment, user equipment) has two RRC states at an air interface: an idle (IDLE) state and a connected (Connected) state. When needing to implement a service, the UE first establishes a connection to a network, switches from the idle state to the connected state, and then performs data transmission. After the data transmission is completed, if the UE in the connected state does not perform data transmission for a long time, the UE needs to disconnect from the network, and switches from the connected state to the idle state.

When downlink data arrives or uplink data arrives, the UE initiates establishment of a new RRC connection at a cell on which the UE currently camps, and switches from the idle state to the connected state. Switching from the idle state to the connected state generates relatively high signaling overheads. With a growing quantity of user equipments, the network is faced with a continuous increase of a service volume, and the continuous increase of the service volume causes a continuous increase of control signaling load generated by switching from the idle state to the connected state. Due to a continuous increase of control signaling, more radio resources are needed to transmit the control signaling. In addition, an affected network node also needs more processing resources to process these control signaling, and this may cause the network node to be overloaded. Therefore, it is crucial to reduce signaling overheads in a UE state switching process.

However, an RRC connection releasing method that can resolve a problem that the signaling overheads in the UE state switching process are relatively high is not currently provided.

In EP 2 557 890 A1, a method, mobile device and radio access network, RAN, are disclosed for suspending and re-establishing a radio resource control connection. In some examples, the mobile device indicates a preference to have the RRC connection either suspended or released.

In other examples, RAN sends to the mobile device a connection suspend command message instructing the mobile device to suspend a RRC connection with the RAN. The mobile device, in response to the connection suspend command message, suspends the RRC connection. When the RRC connection is suspended the mobile device cannot transmit or receive user plane data to the RAN and performs functions the same as or similar to idle mode functions. On suspension, RRC connection information is stored and can be used to re-establish the suspended RRC connection. The RRC connection information can be stored at the UE and/or the RAN node or some other network element. In order to re-establish the RRC connection, the mobile device in one example sends a connection re-establishment request message to the RAN to have the suspended RRC connection re-established. The RAN node may need to attempt to retrieve the RRC connection data (either from memory or if from another network element if stored elsewhere / if the RRC connection was suspended by another RAN node) and verifies whether the RRC connection is valid. When verified, the mobile device receives, in response to the connection re-establishment request message, a connection re-establishment command message from the RAN. In response to the connection re-establishment command message, the mobile device re-establishes the RRC connection with the RAN, using the stored RRC connection information, and sends a connection re-establishment complete message to the RAN. The mobile device and RAN may then resume user plane data communication with each other.

In the paper "Update to the Signaling reduction for UE state transitions solution" from the 3GPP SA WG2 Meeting #110-AH, an introduction of a solution reducing the signaling overhead at UE Idle/Connected state transition is provided. Further, said document provides a clarification of state handling, allowing user plane in message 3, adding possibility to support it over multiple eNBs and general clean-up.

### SUMMARY

Embodiments of the present invention provide an RRC connection releasing method and an apparatus, according to the attached claims, to overcome a disadvantage in the prior art that signaling overheads are relatively high when UE switches from an idle state to a connected state. In the provided solution, the context information of the terminal does not need to be released, so that when entering a connected state again, the terminal does not need to obtain the context information again, thereby reducing signaling overheads.

### BRIEF DESCRIPTION OF DRAWINGS

FIG. 1 is a flowchart of releasing an RRC connection according to an embodiment of the present invention;
FIG. 2 is another flowchart of releasing an RRC connection according to an embodiment of the present invention not falling under the scope of the claims;
FIG. 3 is another flowchart of releasing an RRC connection according to an embodiment of the present invention not falling under the scope of the claims;
FIG. 4 is another flowchart of releasing an RRC connection according to an embodiment of the present invention not falling under the scope of the claims;
FIG. 5 is another embodiment of releasing an RRC connection according to an embodiment of the present invention not falling under the scope of the claims;
FIG. 6 is another embodiment of releasing an RRC connection according to an embodiment of the present invention not falling under the scope of the claims;
FIG. 7 is another embodiment of releasing an RRC connection according to an embodiment of the present invention not falling under the scope of the claims;
FIG. 8A is a schematic diagram of a terminal according to an embodiment of the present invention;
FIG. 8B is another schematic diagram of a terminal according to an embodiment of the present invention not falling under the scope of the claims;
FIG. 9A is a schematic diagram of a first base station according to an embodiment of the present invention;
FIG. 9B is another schematic diagram of a first base station according to an embodiment of the present invention not falling under the scope of the claims;
FIG. 10A is a schematic diagram of a second base station according to an embodiment of the present invention not falling under the scope of the claims;
FIG. 10B is another schematic diagram of a second base station according to an embodiment of the present invention not falling under the scope of the claims;
FIG. 11A is a schematic diagram of an MME according to an embodiment of the present invention not falling under the scope of the claims; and
FIG. 11B is another schematic diagram of an MME according to an embodiment of the present invention not falling under the scope of the claims.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention.

"Multiple" means two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In the following, preferred implementations of the present invention are described in detail with reference to the accompanying drawings. It should be understood that the preferred embodiments described herein are merely used to illustrate and explain the present invention, but are not intended to limit the present invention. In addition, the embodiments of the present application and features in the embodiments may be mutually combined when they do not conflict with each other.

The following describes the embodiments of the present invention in detail with reference to accompanying drawings.

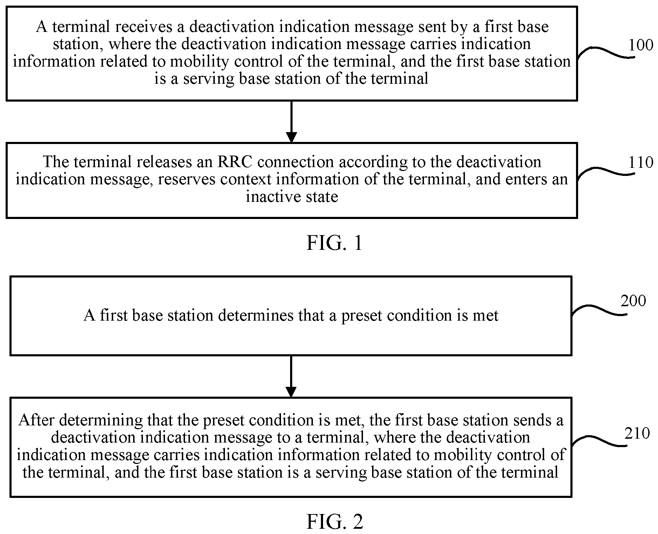

Referring to FIG. 1, in an embodiment of the present invention, a procedure of releasing an RRC connection is as follows:
Step 100: A terminal receives a deactivation indication message sent by a first base station, where the deactivation indication message carries indication information related to mobility control of the terminal, and the first base station is a serving base station of the terminal.

Step 110: The terminal releases an RRC connection according to the deactivation indication message, reserves context information of the terminal, and enters an inactive state.

It should be noted that, that the terminal is in a connected state is used as a premise in the procedure shown in FIG. 1. Therefore, step 100 may also be described in the following form:
A terminal in a connected state receives a deactivation indication message sent by a first base station, where the deactivation indication message carries indication information related to mobility control of the terminal, and the first base station is a serving base station of the terminal.

In this embodiment of the present invention, the deactivation indication message may be a message in a new format. When receiving the deactivation indication message, the terminal may determine, according to this new format, to enter the inactive state. Certainly, an original message format may alternatively be used. In this case, the terminal may identify, according to a special identifier in the deactivation indication message, that the terminal is instructed to enter the inactive state.

In this embodiment of the present invention, a condition of triggering the first base station to send the deactivation indication message may be that the terminal requests the first base station to send the deactivation indication message, or may be that the first base station determines by itself, and then sends the deactivation indication message. Therefore, further, optionally, before the receiving, by a terminal, a deactivation indication message sent by a first base station, the method further includes the following operation:
sending, by the terminal, a deactivation request message to the first base station, where the deactivation request message is used to request the first base station to deactivate the terminal.

When the terminal sends the deactivation request message to the first base station, optionally, the terminal identifies that data packets are discontinuously transmitted. In this case, the terminal may send the deactivation request message to the first base station.

In this embodiment of the present invention, optionally, the indication information is used to instruct the terminal in the inactive state to give priority to, when performing cell reselection, a cell controlled by the first base station.

In this case, further, after the entering, by the terminal, an inactive state, the method further includes the following operation:
during cell reselection of the terminal, when determining, according to the indication information, that a first target cell meeting a reselection condition exists in the cell controlled by the first base station, performing cell reselection to the first target cell.

The foregoing describes a case in which the first target cell meeting the reselection condition exists in the cell controlled by the first base station. Certainly, in actual application, there may be a case in which the first target cell meeting the reselection condition does not exist in the cell controlled by the first base station. Therefore, further, after the entering, by the terminal, an inactive state, the method further includes the following operation:
during cell reselection of the terminal, when determining, according to the indication information, that the first target cell meeting the reselection condition does not exist in the cell controlled by the first base station, performing cell reselection according to broadcast cell reselection priority information.

For example, there are a total of three base stations: a base station 1, a base station 2, and a base station 3. The base station 1 is a serving base station of the terminal, and each base station serves four cells. When the terminal needs to perform cell reselection, the terminal first check, according to indication information, whether a first target cell meeting a reselection condition exists in three cells of the base station 1. If yes, the terminal performs cell reselection to the first target cell selected from the cells of the base station 1. Otherwise, the terminal selects the first target cell from 11 cells according to broadcast cell reselection priority information, and then performs reselection to the first target cell; or excludes four cells of the base station 1 and selects the first target cell from cells (eight cells) of the base station 2 and the base station 3.

The cell of the first base station is preferred mainly because the first base station stores the context information of the terminal. When the terminal is activated, the first base station does not need to obtain the context information of the terminal from another base station. Therefore, an activation time delay is reduced, and the activation efficiency is increased.

In the foregoing description, during the cell reselection, the terminal gives priority to the cell of the first base station. The indication information is used to indicate a cell or base station that is preferred when the terminal in the inactive state performs cell reselection. The preferred cell or base station described herein may be one cell or one base station; or may be multiple cells, where when there are multiple cells, the multiple cells may form a cell list; or may be multiple base stations, where when there are multiple base stations, the multiple base stations may form a base station list.

After the entering, by the terminal, an inactive state, the method further includes the following operation:
during cell reselection of the terminal, when determining, according to the indication information, that a second target cell meeting a reselection condition exists in the preferred cell or a cell controlled by the preferred base station, performing cell reselection to the second target cell.

Further, after the entering, by the terminal, an inactive state, the method further includes the following operation:
during cell reselection of the terminal, when determining, according to the indication information, that the second target cell meeting the reselection condition does not exist in the preferred cell or the cell controlled by the preferred base station, performing cell reselection according to broadcast cell reselection priority information.

For example, there are three preferred base stations: a base station 1, a base station 2, and a base station 3. Each base station serves four cells. When the terminal needs to perform cell reselection, the terminal first check, according to indication information, whether a second target cell meeting a reselection condition exists in 12 cells of the three base stations. If yes, the terminal accesses the second target cell selected from the cells of the three base stations. Otherwise, the terminal selects the second target cell according to broadcast cell reselection priority information, and then performs reselection to the second target cell.

The preferred cell or base station extracts the stored context information of the terminal. In this way, when the terminal is activated, the preferred cell or base station does not need to obtain the context information of the terminal from the first base station. Therefore, an activation time delay is reduced, and the activation efficiency is increased.

In this embodiment of the present invention, optionally, the indication information is used to instruct to notify, when the terminal performs reselection to a cell controlled by a second base station, the second base station that the terminal performs reselection to the cell controlled by the second base station. In this way, the second base station can obtain the context information of the terminal from the first base station in advance, so that a procedure of activating the terminal is faster when the terminal needs to perform data transmission, reducing a data transmission time delay; in addition, accurate paging can be implemented, saving limited paging resources, and reducing a probability of paging congestion.

In this case, after the entering, by the terminal, an inactive state, the method further includes the following operation:
when performing cell reselection to the cell controlled by the second base station, notifying, by the terminal according to the indication information, the second base station that the terminal performs reselection to the cell controlled by the second base station.

In this embodiment of the present invention, further, when the terminal has performed reselection to the cell controlled by the second base station, the second base station needs to send a base station change response message to the terminal, to indicate that the terminal has successfully performed reselection to the cell controlled by the second base station.

In this embodiment of the present invention, the indication information is used to instruct to notify, when the terminal performs reselection to the cell controlled by the second base station, the second base station that the terminal performs reselection to the cell controlled by the second base station. The first base station may configure, according to factors such as a time delay of the terminal, QoS (Quality of Service, quality of service), and whether paging resources are congested, the indication information to achieve the foregoing function.

In this embodiment of the present invention, optionally, to reduce signaling overheads, and prevent a waste of resources, when the terminal notifies, according to the indication information, the second base station that the terminal performs reselection to the cell controlled by the second base station, the terminal may optionally use the following manner:
notifying, by the terminal according to the indication information by using a random access process, the second base station that the terminal performs reselection to the cell controlled by the second base station.

In this embodiment of the present invention, the terminal may establish random access in the following manner:
sending, by the terminal, an RA (Random Access, random access) preamble to the second base station, and sending, by the second base station, an RA response to the terminal after receiving the RA preamble.

Further, when notifying the second base station that the terminal performs reselection to the cell controlled by the second base station, the terminal further informs the second base station of source cell information and terminal identifier information used to identify an identity of the terminal.

It should be noted that, after performing the random access process, the terminal does not need to establish an RRC connection. Therefore, the foregoing notifying, by the terminal by using a random access process, the second base station that the terminal performs reselection to the cell controlled by the second base station means that the terminal notifies, by directly using the random access process, the second base station that the terminal performs reselection to the cell controlled by the second base station without needing to establish the RRC connection to notify the second base station that the terminal performs reselection to the cell controlled by the second base station. The terminal may avoid establishing the RRC connection, and therefore the activation efficiency can be increased.

In this embodiment of the present invention, optionally, the source cell information includes an ECGI (Evolved Cell Global Identifier, evolved cell global identifier) or a frequency+PCI (Physical cell Identifier, physical cell identifier).

In this embodiment of the present invention, optionally, the indication information is used to indicate that, after the terminal performs reselection to a cell controlled by a second base station, the terminal is allowed to initiate an activation process at the second base station. In this way, when performing reselection to the second base station, the terminal may initiate the activation process at the cell of the second base station, reducing a data transmission time delay.

Further, after the entering, by the terminal, an inactive state, the method further includes the following operation:
after the terminal performs cell reselection to the cell controlled by the second base station, when determining that a preset condition is met, sending, by the terminal, an activation request message to the second base station, where the activation request message carries source cell information and terminal identifier information used to identify an identity of the terminal;
receiving, by the terminal, an activation message sent by the second base station, and recovering a context according to the activation message; and
sending, by the terminal, an activation complete message to the second base station, and entering a connected state.

In the foregoing description, the terminal performs reselection to a cell of the second base station. Certainly, in actual application, the terminal may alternatively perform reselection to a cell of the first base station. Therefore, in this embodiment of the present invention, after the entering, by the terminal, an inactive state, the method further includes the following operations:
when the terminal determines that a preset condition is met, sending, by the terminal, an activation request message to the first base station, where the activation request message carries source cell information and terminal identifier information used to identify an identity of the terminal;
receiving, by the terminal, an activation message sent by the first base station, and recovering a context according to the activation message; and
sending, by the terminal, an activation complete message to the source base station, and entering a connected state.

That is, when the terminal performs reselection to the cell of the first base station, the terminal sends the activation request message to the first base station when needing to be activated; and when the terminal performs reselection to the cell of the second base station, the terminal sends the activation request message to the second base station when needing to be activated.

When the terminal determines that the preset condition is met, optionally, the following manners may be used:
the terminal determines that a paging message is received; or
the terminal determines that uplink data arrives; or
the terminal needs to perform a TAU (Tracking Area Update, tracking area update).

In this embodiment of the present invention, after the terminal sends the activation request message to the first base station, the terminal may not receive the activation message sent by the first base station, but receive an activation rejection message sent by the first base station. In this case, the terminal needs to delete the reserved context information, and initiate a process of establishing a new RRC connection.

In this embodiment of the present invention, after recovering the context, the terminal needs to update the recovered context in some cases. Therefore, in this embodiment of the present invention, the activation message carries a context update parameter.

In this case, after the recovering, by the terminal, a context according to the activation message, the method further includes the following operation:
updating, by the terminal, the recovered context according to the context update parameter.

To enhance security, after performing cell reselection, the terminal needs to interact with a base station based on a new key. Therefore, in this embodiment of the present invention, after the receiving, by the terminal, an activation message sent by the first base station or the second base station, the method further includes the following operations:
deriving, by the terminal, a first key or a second key based on information about a cell that initiates activation and the context information reserved by the terminal; and
communicating, by the terminal, with the first base station based on the first key, or communicating with the second base station based on the second key.

To prevent resource occupation caused by hanging of the context information of the terminal, and to increase resource utilization of the terminal, further, the deactivation indication message further carries context validity period information of the terminal.

After the entering, by the terminal, an inactive state, the method further includes the following operation:
starting, by the terminal, a context validity period timer when the terminal enters the inactive state, and if the context validity period timer times out, releasing the context information of the terminal.

In this solution, when releasing an RRC connection, the terminal does not need to release the context information of the terminal. In this way, when entering the connected state again, the terminal does not need to obtain the context information again. Therefore, the signaling overheads are reduced. In this embodiment of the present invention, after the terminal enters the inactive state, a C-RNTI (Cell Radio Network Temporary Identifier, cell radio network temporary identifier) of the terminal is released, and the base station may allocate the C-RNTI to another terminal for use. After the terminal is activated, the base station allocates a new C-RNTI to the terminal for use.

After the terminal enters the inactive state, measurement configurations are reserved. However, in the inactive state, the terminal does not use these measurement configurations to perform measurement of the inactive state, but performs measurement by using a cell reselection parameter broadcast in system information. When being activated, the terminal continues to use the measurement configurations to perform measurement.

In this embodiment of the present invention, optionally, the context information of the terminal may include an RRC configuration, a bearer configuration, security context information, and the like.

In this embodiment of the present invention, optionally, the terminal identifier information includes a C-RNTI and a short MAC (Media Access Control, Media Access Control)-I.

In this embodiment of the present invention, after receiving the deactivation indication message, the first base station also needs to start a context validity period timer, and release the context information of the terminal when the context validity period timer times out.

All the content described above is performed based on that the deactivation indication message carries the indication information. Certainly, in actual application, content indicated by the indication information may alternatively be stipulated in a protocol. In this case, when the terminal receives the deactivation indication message, the terminal performs the content according to the stipulation in the protocol. For example, the protocol stipulates that after the terminal enters the active state, the terminal gives priority to a cell of a serving base station when performing reselection. Therefore, this embodiment of the present invention further includes the following method:
receiving, by a terminal, a deactivation indication message sent by a first base station, where the first base station is a serving base station of the terminal; and
releasing, by the terminal, an RRC connection according to the deactivation indication message, reserving context information of the terminal, and entering an inactive state. During cell reselection of the terminal, the terminal determines whether a first target cell meeting a reselection condition exists in a cell controlled by the first base station. If yes, the terminal performs the cell reselection to the first target cell. Otherwise, the terminal performs the cell reselection according to broadcast cell reselection priority information.

In the foregoing description, the protocol stipulates that after the terminal enters the active state, when performing reselection, the terminal gives priority to the cell of the serving base station. Certainly, the protocol may alternatively stipulate that, when the terminal performs reselection to the cell controlled by the second base station, the terminal needs to notify the second base station of the information. Therefore, this embodiment of the present invention further includes the following method:
receiving, by a terminal, a deactivation indication message sent by a first base station, where the first base station is a serving base station of the terminal; and
releasing, by the terminal, an RRC connection according to the deactivation indication message, reserving context information of the terminal, and entering an inactive state. When performing cell reselection to the cell controlled by the second base station, the terminal notifies the second base station that the terminal performs reselection to the cell controlled by the second base station.

Alternatively, the protocol may stipulate that when a preset condition is met, the terminal sends an activation request message to a serving base station of the terminal. Therefore, this embodiment of the present invention further includes the following method:
receiving, by a terminal, a deactivation indication message sent by a first base station, where the first base station is a serving base station of the terminal;
releasing, by the terminal, an RRC connection according to the deactivation indication message, reserving context information of the terminal, and entering an inactive state;
when the terminal determines that a preset condition is met, sending, by the terminal, an activation request message to the first base station, where the activation request message carries source cell information and terminal identifier information used to identify an identity of the terminal;
receiving, by the terminal, an activation message sent by the first base station, and recovering a context according to the activation message; and
sending, by the terminal, an activation complete message to the source base station, and entering a connected state.

Optionally, that the terminal determines that a preset condition is met includes the following manner:
the terminal determines that a paging message is received; or
the terminal determines that uplink data arrives; or
the terminal needs to perform a TAU.

Referring to FIG. 2, in an embodiment of the present invention not falling under the scope of the claims, a procedure of releasing an RRC connection is as follows:
Step 200: A first base station determines that a preset condition is met.

Step 210: After determining that the preset condition is met, the first base station sends a deactivation indication message to a terminal, where the deactivation indication message carries indication information related to mobility control of the terminal, and the first base station is a serving base station of the terminal.

It should be noted that, the terminal in step 210 is a terminal in a connected state.

In this embodiment of the present invention not falling under the scope of the claims, the deactivation indication message may be a message in a new format. When receiving the deactivation indication message, the terminal may determine, according to this new format, to enter the inactive state. Certainly, an original message format may alternatively be used. In this case, the terminal may identify, according to a special identifier in the deactivation indication message, that the terminal is instructed to enter the inactive state.

In this embodiment of the present invention not falling under the scope of the claims, when the first base station determines that the preset condition is met, optionally, the following manner may be used:
determining, by the first base station, that an inactivity timer times out; or
receiving, by the first base station, a deactivation request message sent by the terminal, where the deactivation request message is used to request the first base station to deactivate the terminal.

That is, that are two conditions for triggering the first base station to send the deactivation indication message to the terminal, one is that the first base station determines that the inactivity timer times out, and the other is that the first base station receives the deactivation request message sent by the terminal. Certainly, there may further have another trigger condition. This is not specifically limited herein.

In this embodiment of the present invention not falling under the scope of the claims, optionally, the indication information is used to instruct the terminal in the inactive state to give priority to, when performing cell reselection, a cell controlled by the first base station; or
the indication information is used to indicate a cell or base station that is preferred when the terminal in the inactive state performs cell reselection.

In this embodiment of the present invention not falling under the scope of the claims, optionally, the indication information is used to instruct to notify, when the terminal performs reselection to the cell controlled by the second base station, the second base station that the terminal performs reselection to the cell controlled by the second base station, and/or, the indication information is used to indicate that, after the terminal performs reselection to the second base station, the terminal is allowed to initiate an activation process at the second base station; and
after the sending, by the first base station, a deactivation indication message to a terminal, the method further includes the following operations:
receiving, by the first base station, a context request sent by the second base station, where the context request carries source cell information, terminal identifier information used to identify an identity of the terminal, and target cell information; and
sending, by the first base station, the reserved context information of the terminal to the second base station according to the context request.

In this embodiment of the present invention, optionally, the source cell information includes an ECGI and a frequency+PCI.

It should be noted that, the source cell is a serving cell at which the terminal is located when the terminal receives the deactivation indication message, or may be a camping-on cell or a serving cell at which the terminal is located when the last time the terminal notifies another base station that reselection is performed to a cell controlled by the another base station. A target cell is a camping-on cell or a serving cell when the terminal initiates an activation process, or is a camping-on cell or a serving cell when the terminal notifies the second base station that the terminal performs reselection to the cell controlled by the second base station.

In this embodiment of the present invention not falling under the scope of the claims, the first base station may configure, according to factors such as a time delay of the terminal, QoS, and whether paging resources are congested, the indication information to be used to instruct to notify, when the terminal performs reselection to the cell controlled by the second base station, the second base station that the terminal performs reselection to the cell controlled by the second base station.

To enhance security, in this embodiment of the present invention not falling under the scope of the claims, after the receiving, by the first base station, a context request sent by the second base station, the method further includes the following operation:
generating, by the first base station, a first key based on the target cell information, and sending the first key to the second base station.

To increase resource utilization, in this embodiment of the present invention not falling under the scope of the claims, further, after the
sending, by the first base station, the context information of the terminal to the second base station, the method further includes the following operation:
receiving, by the first base station, a context information release message sent by an MME or the second base station, and releasing the reserved context information according to the context information release message.

The foregoing describes a case in which the terminal performs reselection to a cell of the second base station. In actual application, the terminal may alternatively perform reselection to a cell of the first base station. Therefore, in this embodiment of the present invention not falling under the scope of the claims, after the sending,
by the first base station, a deactivation indication message to a terminal, the method further includes the following operations:
receiving, by the first base station, an activation request message sent by the terminal, where the activation request message carries source cell information and terminal identifier information used to identify an identity of the terminal;
when determining, according to the source cell information, that a source cell is a cell of the first base station, obtaining, by the first base station, the context information of the terminal;
sending, by the first base station, an activation message to the terminal; and receiving, by the first base station, an activation complete message sent by the terminal.

In this embodiment of the present invention not falling under the scope of the claims, optionally, the activation message carries a context update parameter.

In this way, when receiving the activation message, the terminal may update the obtained context information according to the context update parameter.

In this embodiment of the present invention not falling under the scope of the claims, further, to enhance security, after the receiving, by the first base station, an activation request message sent by the terminal, the method further includes the following operations:
deriving, by the first base station, a second key based on cell identifier information of a cell at which activation is initiated, and the context information reserved by the terminal; and communicating, by the first base station, with the terminal based on the second key.

In this embodiment of the present invention not falling under the scope of the claims, after the receiving, by the first base station, an activation complete message sent by the terminal, the method further includes the following operation:
sending, by the first base station, a notification message to a mobility management entity MME, to notify the MME that the terminal enters a connected state.

In this way, the MME informs an S-GW (Serving Gateway, serving gateway) of information indicating that the terminal enters the connected state. After receiving the notification message, the S-GW determines that the terminal establishes an RRC connection to the base station, so that the S-GW may directly transmit data to the terminal. When the S-GW needs to interact with the terminal, the S-GW does not need to send a paging message, thereby reducing paging resource overheads of an air interface.

Similarly, when the terminal enters the active state, the first base station also needs to tell the MME, and the MME informs the S-GW of information indicating that the terminal enters the active state. In this way, the S-GW cannot directly transmit data to the terminal, and needs to perform paging.

The foregoing describes a process of sending, by the first base station, the activation message to the terminal after receiving the activation request message sent by the terminal. In actual application, after receiving the activation request message sent by the terminal, the first base station may not send the activation message to the terminal.

For example, when the first base station does not find the context information of the terminal or the base station determines not to perform activation, the first base station needs to send an activation rejection message to the terminal.

Optionally, the activation rejection message may include an activation rejection reason.

In this embodiment of the present invention not falling under the scope of the claims, optionally, the context information of the terminal may include an RRC configuration, a bearer configuration, security context information, and the like.

In this embodiment of the present invention not falling under the scope of the claims, optionally, the terminal identifier information includes a C-RNTI and a short MAC-I.

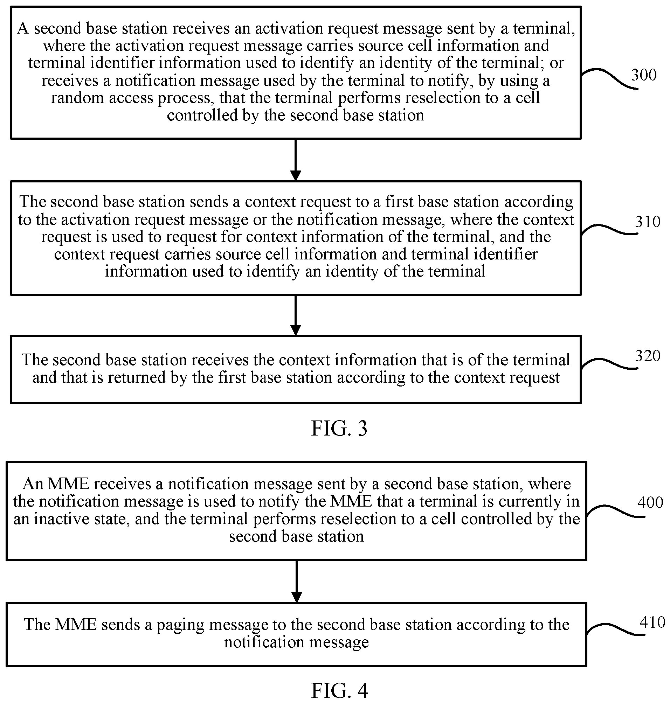

Referring to FIG. 3, in an embodiment of the present invention not falling under the scope of the claims, a procedure of releasing an RRC connection is as follows:
Step 300: A second base station receives an activation request message sent by a terminal, where the activation request message carries source cell information and terminal identifier information used to identify an identity of the terminal; or receives a notification message used by the terminal to notify, by using a random access process, that the terminal performs reselection to a cell controlled by the second base station.

Step 310: The second base station sends a context request to a first base station according to the activation request message or the notification message, where the context request is used to request for context information of the terminal, and the context request carries source cell information and terminal identifier information used to identify an identity of the terminal.

Step 320: The second base station receives the context information that is of the terminal and that is returned by the first base station according to the context request.

In this embodiment of the present invention not falling under the scope of the claims, optionally, the source cell information includes an ECGI and a frequency+PCI.

In this embodiment of the present invention not falling under the scope of the claims, the second base station receives the activation request message sent by the terminal, where the activation request message carries the source cell information and the terminal identifier information used to identify the identity of the terminal; or receives the notification message used by the terminal to notify, by using the random access process, that the terminal performs reselection to the cell controlled by the second base station.

That is, there may be the following two conditions for triggering the second base station to send the context request to the first base station: One is that the second base station receives the activation request message sent by the terminal.

The other is that the second base station determines that the terminal performs reselection to the cell controlled by the second base station.

In this embodiment of the present invention not falling under the scope of the claims, when the second base station determines that the terminal performs reselection to the cell controlled by the second base station, the second base station needs to send a base station change response message to the terminal, to indicate that the terminal has successfully performed reselection to the cell controlled by the second base station.

In this embodiment of the present invention not falling under the scope of the claims, further, after the receiving, by a second base station, an activation request message sent by a terminal, and before the sending, by the second base station, a context request to a first base station, the following operation further needs to be performed:
determining, by the second base station according to the source cell information, that a source cell is not a cell controlled by the second base station.

In this embodiment of the present invention not falling under the scope of the claims, further, after the receiving, by the second base station, the context information that is of the terminal and that is returned by the first base station according to the context request, the method further includes the following operations:
sending, by the second base station, an activation message to the terminal; and
receiving, by the second base station, an activation complete message sent by the terminal, and determining that the terminal enters a connected state.

In this embodiment of the present invention not falling under the scope of the claims, after determining that the terminal enters the connected state, a second base station further needs to send a path change request message to an MME, and receive a path change response message that is sent by the MME when the MME transfers a data link of an S1 interface of the terminal to the second base station.

In this embodiment of the present invention not falling under the scope of the claims, to increase resource utilization, after the second base station receives the path change response message that is sent by the MME, the method further includes the following operation:
sending, by the second base station, a context information release message to the first base station.

To enhance security, in this embodiment of the present invention, further, after the sending, by the second base station, a context request to a first base station, the method further includes the following operations:
receiving, by the second base station, a first key sent by the first base station; and
communicating, by the second base station, with the terminal according to the first key.

In this embodiment of the present invention not falling under the scope of the claims, further, after the receiving, by the second base
station, the context information that is of the terminal and that is returned by the first base station according to the context request, the method further includes the following operation:
sending, by the second base station, a notification message to the MME, where the notification message is used to notify the MME of information indicating that the terminal is currently located at the second base station.

In this way, after receiving the notification message, the MME does not deliver a paging message to multiple base stations in a large range any more, but directly sends a paging message to the second base station, thereby reducing paging resource overheads of an air interface.

In this embodiment of the present invention not falling under the scope of the claims, optionally, the terminal identifier information includes a C-RNTI and a short MAC-I.

Referring to FIG. 4, in an embodiment of the present invention not falling under the scope of the claims, a procedure of releasing an RRC connection is as follows:
Step 400: An MME receives a notification message sent by a second base station, where the notification message is used to notify the MME that a terminal is currently in an inactive state, and the terminal performs reselection to a cell controlled by the second base station.

Step 410: The MME sends a paging message to the second base station according to the notification message.

In this embodiment of the present invention not falling under the scope of the claims, when downlink data arrives at the terminal, the MME does not deliver a paging message to multiple base stations according to a TA list, but directly sends a paging message to the second base station, thereby reducing paging resource overheads of an air interface.

In this embodiment of the present invention not falling under the scope of the claims, to increase resource utilization, after the receiving, by an MME, a notification message sent by a second base station, the method further includes the following operations:
transferring, by the MME, a data link of an SI interface of the terminal to the second base station; and
sending, by the MME, a context information release message of the terminal to a first base station.

In this embodiment of the present invention not falling under the scope of the claims, optionally, the MME receives a notification
message sent by the first base station, and the notification message is used to notify the MME that the terminal enters a connected state from an active state. In this way, the MME informs an S-GW of information indicating that the terminal enters the connected state, so that the S-GW may directly perform data transmission with the terminal, avoiding sending of a paging message. To better understand this embodiment of the present invention not falling under the scope of the claims, the following provides a specific
application scenario, to further describe a process of releasing an RRC connection in detail:

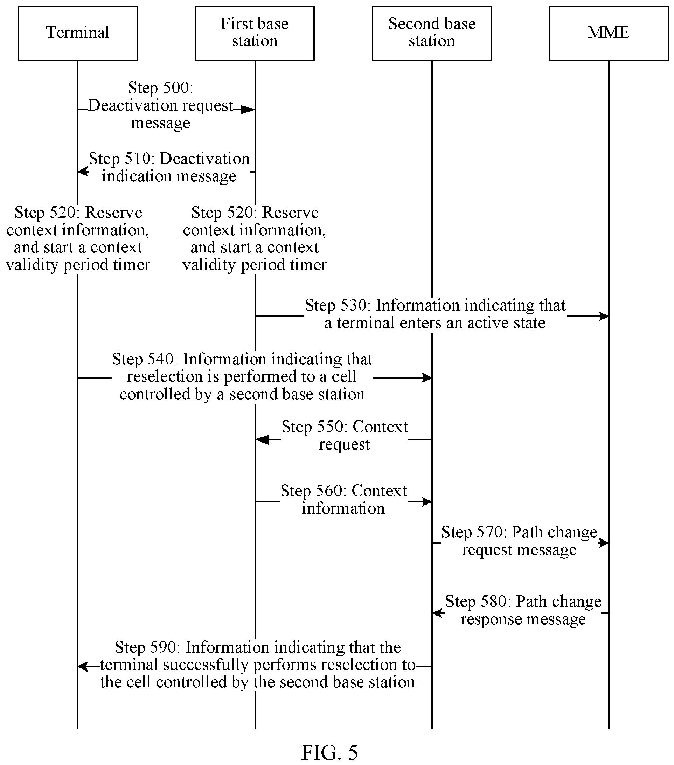

As shown in FIG. 5: Embodiment 1, not falling under the scope of the claims. Step 500: When determining that data transmission is discontinuous, a terminal sends a deactivation request message to a first base station.

Step 510: The terminal receives a deactivation indication message sent by the first base station, where the deactivation indication message carries indication information related to mobility control of the terminal, the indication information is used to instruct to notify, when the terminal performs reselection to a cell controlled by a second base station, the second base station that the terminal performs reselection to the cell controlled by the second base station, and the first base station is a serving base station of the terminal.

Step 520: Both the first base station and the terminal reserve context information of the terminal, and start a context validity period timer.

Step 530: The first base station notifies an MME of information indicating that the terminal enters an active state.

Step 540: The terminal notifies, according to the indication information, the second base station of information indicating that the reselection is performed to the cell controlled by the second base station.

Step 550: The second base station sends a context request to the first base station, where the context request carries source cell information, terminal identifier information used to identify an identity of the terminal, and target cell information.

Step 560: The first base station obtains the context information of the terminal according to the context request, and sends the context information of the terminal to the second base station. Step 570: The second base station sends a path change request message to the MME.

Step 580: The second base station receives a path change response message that is sent by the MME when the MME transfers a data link of an SI interface of the terminal to the second base station.

Step 590: The second base station notifies the terminal of information indicating that the terminal successfully performs reselection to the cell controlled by the second base station.

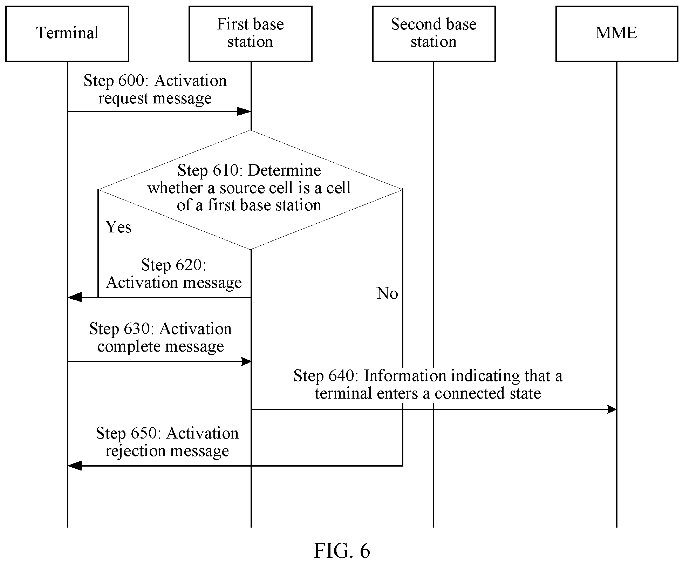

The embodiment not falling under the scope of the claims shown in FIG. 5 describes the operations performed when the terminal enters the active state. After the terminal enters the active state, activation needs to be performed again in some cases. Therefore, to describe a process of activating the terminal, the following embodiment not falling under the scope of the claims is provided:
Embodiment 2: Referring to FIG. 6, this embodiment not falling under the scope of the claims mainly describes that a terminal is activated at a first base station.

Step 600: When uplink and downlink data arrives at the terminal, the terminal sends an activation request message to the first base station, where the activation request message carries source cell information and terminal identifier information used to identify an identity of the terminal.

Step 610: The first base station determines, according to the source cell information, whether a source cell is a cell of the first base station, and if yes, performs step 620; otherwise, performs step 650.

Step 620: The first base station sends an activation message to the terminal.

Step 630: The first base station receives an activation complete message sent by the terminal. Step 640: The first base station notifies an MME of information indicating that the terminal enters a connected state.

Step 650: The first base station sends an activation rejection message to the terminal.

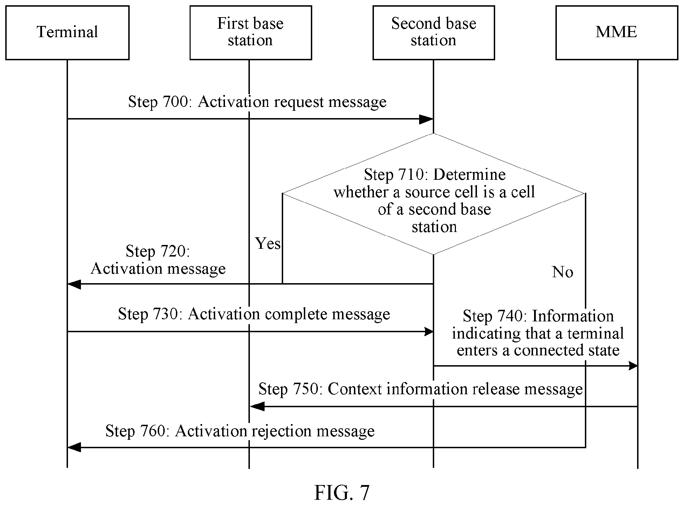

Optionally, the activation rejection message may include an activation rejection reason. Embodiment 3: Referring to FIG. 7, this embodiment not falling under the scope of the claims mainly describes that a terminal is activated at a second base station.

Step 700: When uplink and downlink data arrives at the terminal, the terminal sends an activation request message to the second base station, where the activation request message carries source cell information and terminal identifier information used to identify an identity of the terminal.

Step 710: The second base station determines, according to the source cell information, whether a source cell is a cell of the second base station, and if yes, performs step 720; otherwise, performs step 760.

Step 720: The second base station sends an activation message to the terminal.

Step 730: The second base station receives an activation complete message sent by the terminal. Step 740: The second base station notifies an MME of information indicating that the terminal enters a connected state.

Step 750: The MME sends a context information release message to the first base station, so that the first base station releases reserved context information according to the context information release message.

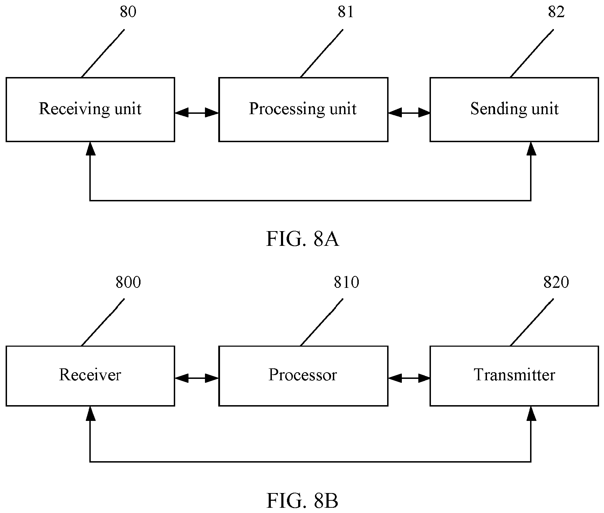

Step 760: The second base station sends an activation rejection message to the terminal. Optionally, the activation rejection message may include an activation rejection reason. Referring to FIG. 8A, in this embodiment of the present invention, a schematic diagram of a terminal is provided. The terminal includes a receiving unit 80 and a processing unit 81.

The receiving unit 80 receives a deactivation indication message sent by a first base station, where the deactivation indication message carries indication information related to mobility control of the terminal, and the first base station is a serving base station of the terminal.

The processing unit 81 is configured to: release an RRC connection according to the deactivation indication message received by the receiving unit 80, reserve context information of the terminal, and enter an inactive state.

In this embodiment of the present invention, further, the terminal further includes a sending unit 82, configured to send a deactivation request message to the first base station, where the deactivation request message is used to request the first base station to deactivate the terminal. Optionally, the indication information is used to instruct the terminal in the inactive state to give priority to, when performing cell reselection, a cell controlled by the first base station; and
the processing unit 81 is further configured to: during cell reselection of the terminal, when determining, according to the indication information, that a first target cell meeting a reselection condition exists in the cell controlled by the first base station, perform cell reselection to the first target cell.

Further, the processing unit 81 is further configured to: during cell reselection of the terminal, when determining, according to the indication information, that the first target cell meeting the reselection condition does not exist in the cell controlled by the first base station, perform cell reselection according to broadcast cell reselection priority information.

The indication information is used to indicate a cell or base station that is preferred when the terminal in the inactive state performs cell reselection; and
the processing unit 81 is further configured to: during cell reselection of the terminal, when determining, according to the indication information, that a second target cell meeting a reselection condition exists in the preferred cell or a cell controlled by the preferred base station, perform cell reselection to the second target cell.

Further, the processing unit 81 is further configured to: during cell reselection of the terminal, when determining, according to the indication information, that the second target cell meeting the reselection condition does not exist in the preferred cell or the cell controlled by the preferred base station, perform cell reselection according to broadcast cell reselection priority information. Optionally, the indication information is used to instruct to notify, when the terminal performs reselection to a cell controlled by a second base station, the second base station that the terminal performs reselection to the cell controlled by the second base station; and
the terminal further includes a sending unit 82, configured to: when the terminal performs cell reselection to the cell controlled by the second base station, notify, according to the indication information, the second base station that the terminal performs reselection to the cell controlled by the second base station.

Optionally, that the sending unit 82 notifies, according to the indication information, the second base station that the terminal performs reselection to the cell controlled by the second base station is specifically:
notifying, according to the indication information by using a random access process, the second base station that the terminal performs reselection to the cell controlled by the second base station.

Optionally, the indication information is used to indicate that, after the terminal performs reselection to a cell controlled by a second base station, the terminal is allowed to initiate an activation process at the second base station;
the processing unit 81 is further configured to determine that a preset condition is met;
the terminal further includes a sending unit 82, configured to: after the terminal performs cell reselection to the cell controlled by the second base station, when the processing unit 81 determines that the preset condition is met, send an activation request message to the second base station, where the activation request message carries source cell information and terminal identifier information used to identify an identity of the terminal;
the receiving unit 80 is further configured to receive an activation message sent by the second base station;
the processing unit 81 is further configured to recover a context according to the activation message; and
the sending unit 82 is further configured to send an activation complete message to the second base station, and enter a connected state.

Further, the processing unit 81 is further configured to determine that a preset condition is met;
the terminal further includes a sending unit 82, configured to: when the processing unit 81 determines that the preset condition is met, send an activation request message to the first base station, where the activation request message carries source cell information and terminal identifier information used to identify an identity of the terminal;
the receiving unit 80 is further configured to receive an activation message sent by the first base station;
the processing unit 81 is further configured to recover a context according to the activation message; and
the sending unit 82 is further configured to send an activation complete message to the source base station, and enter a connected state.

Optionally, that the processing unit 81 determines that a preset condition is met is specifically:
it is determined that a paging message is received; or
it is determined that uplink data arrives; or
a tracking area update TAU needs to be performed.

Optionally, the activation message carries a context update parameter; and
the processing unit 81 is further configured to update the recovered context according to the context update parameter.

Further, the processing unit 81 is further configured to: derive a first key or a second key based on information about a cell that initiates activation and the context information reserved by the terminal; and communicate with the first base station based on the first key, or communicate with the second base station based on the second key.

Further, the deactivation indication message further carries context validity period information of the terminal; and
the processing unit 81 is further configured to: start a context validity period timer, and if the context validity period timer times out, release the context information of the terminal. Referring to FIG. 8B, in this embodiment of the present invention not falling under the scope of the claims, a schematic diagram of a terminal is provided. The terminal includes a receiver 800 and a processor 810.

The receiver 800 receives a deactivation indication message sent by a first base station, where the deactivation indication message carries indication information related to mobility control of the terminal, and the first base station is a serving base station of the terminal.

The processor 810 is configured to: release an RRC connection according to the deactivation indication message received by the receiver 800, reserve context information of the terminal, and enter an inactive state.

It should be noted that, the receiver 800 is further configured to perform another operation performed by the receiving unit 80, and the processor 810 is further configured to perform another operation performed by the processing unit 81. The terminal further includes a transmitter 820, configured to perform an operation performed by the sending unit 82.

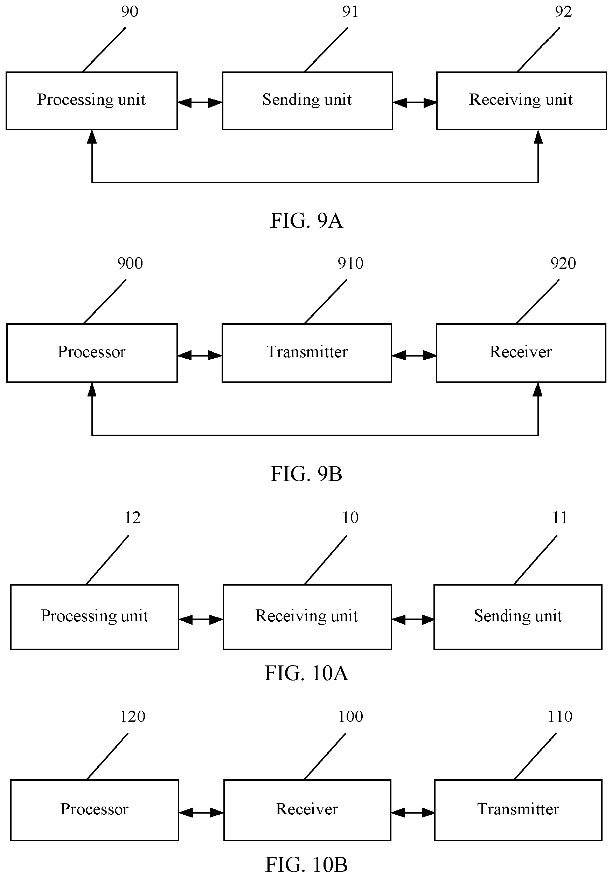

Referring to FIG. 9A, in this embodiment of the present invention, a schematic diagram of a first base station is provided. The first base station includes a processing unit 90 and a sending unit 91.

The processing unit 90 is configured to determine that a preset condition is met.

The sending unit 91 is configured to: after the processing unit 90 determines that the preset condition is met, send a deactivation indication message to a terminal, and reserve context information of the terminal, where the deactivation indication message carries indication information related to mobility control of the terminal, and the first base station is a serving base station of the terminal.

Further, the first base station further includes a receiving unit 92, configured to receive a deactivation request message sent by the terminal; and
that the processing unit 90 determines that a preset condition is met is specifically:
determining that an inactivity timer times out; or
receiving, by the receiving unit 92, a deactivation request message sent by the terminal, where the deactivation request message is used to request the first base station to deactivate the terminal.

The indication information is used to indicate a cell or base station that is preferred when the terminal in the inactive state performs cell reselection.

Optionally, the indication information is used to instruct to notify, when the terminal performs reselection to the cell controlled by the second base station, the second base station that the terminal performs reselection to the cell controlled by the second base station, and/or, the indication information is used to indicate that, after the terminal performs reselection to the second base station, the terminal is allowed to initiate an activation process at the second base station; and
the first base station further includes a receiving unit 92, configured to receive a context request sent by the second base station, where the context request carries source cell information, terminal identifier information used to identify an identity of the terminal, and target cell information; and
the sending unit 91 is further configured to send the reserved context information of the terminal to the second base station. Further, the processing unit 90 is further configured to generate a first key based on the target cell information; and
the sending unit 91 is further configured to send the first key to the second base station.

Further, the first base station further includes a receiving unit 92, configured to receive a context information release message sent by an MME or the second base station; and
the processing unit 90 is further configured to release the reserved context information according to the context information release message.

Further, the first base station further includes a receiving unit 92, configured to receive an activation request message sent by the terminal, where the activation request message carries source cell information and terminal identifier information used to identify an identity of the terminal;
the processing unit 90 is further configured to: when determining, according to the source cell information, that a source cell is a cell of the first base station, obtain the context information of the terminal;
the sending unit 91 is further configured to send an activation message to the terminal; and
the receiving unit 92 is further configured to receive an activation complete message sent by the terminal.

Optionally, the activation message carries a context update parameter.

Further, the processing unit 90 is further configured to: derive a second key based on cell identifier information of a cell at which activation is initiated, and the context information reserved by the terminal; and communicate with the terminal based on the second key.

Further, the sending unit 91 is further configured to send a notification message to a mobility management entity MME, to notify the MME that the terminal enters a connected state.

Referring to FIG. 9B, in this embodiment of the present invention not falling under the scope of the claims, a schematic diagram of a first base station is provided. The first base station includes a processor 900 and a transmitter 910.

The processor 900 is configured to determine that a preset condition is met.

The transmitter 910 is configured to: after the processor 900 determines that the preset condition is met, send a deactivation indication message to a terminal, and reserve context information of the terminal, where the deactivation indication message carries indication information related to mobility control of the terminal, and the first base station is a serving base station of the terminal. It should be noted that, the processor 900 is further configured to perform another operation performed by the processing unit 90, and the transmitter 910 is further configured to perform another operation performed by the sending unit 91. The first base station further includes a receiver 920, configured to perform an operation performed by the receiving unit 92.

Referring to FIG. 10A, in this embodiment of the present invention not falling under the scope of the claims, a schematic diagram of a second base station is provided. The second base station includes a receiving unit 10 and a sending unit 11.

The receiving unit 10 is configured to receive an activation request message sent by a terminal, where the activation request message carries source cell information and terminal identifier information used to identify an identity of the terminal; or receive a notification message used by the terminal to notify, by using a random access process, that the terminal performs reselection to a cell controlled by the second base station.

The sending unit 11 is configured to send a context request to a first base station according to the activation request message or the notification message, where the context request is used to request for context information of the terminal, and the context request carries source cell information and terminal identifier information used to identify an identity of the terminal.

The receiving unit 10 is further configured to receive the context information that is of the terminal and that is returned by the first base station according to the context request.

Further, the receiving unit 10 is further configured to receive a first key sent by the first base station; and
the second base station further includes a processing unit 12, configured to communicate with the terminal according to the first key.

Further, the sending unit 11 is further configured to send a notification message to a mobility management entity MME, where the notification message is used to notify the MME of information indicating that the terminal is currently located at the second base station.

Referring to FIG. 10B, in this embodiment of the present invention not falling under the scope of the claims, a schematic diagram of a second base station is provided. The second base station includes a receiver 100 and a transmitter 110.

The receiver 100 is configured to receive an activation request message sent by a terminal, where the activation request message carries source cell information and terminal identifier information used to identify an identity of the terminal; or receive a notification message used by the terminal to notify, by using a random access process, that the terminal performs reselection to a cell controlled by the second base station.

The transmitter 110 is configured to send a context request to a first base station according to the activation request message or the notification message, where the context request is used to request for context information of the terminal, and the context request carries source cell information and terminal identifier information used to identify an identity of the terminal.

The receiver 100 is further configured to receive the context information that is of the terminal and that is returned by the first base station according to the context request.

It should be noted that, the receiver 100 is further configured to perform another operation performed by the receiving unit 10, and the transmitter 110 is further configured to perform another operation performed by the sending unit 11. The second base station further includes a processor 120, configured to perform an operation performed by the processing unit 12.

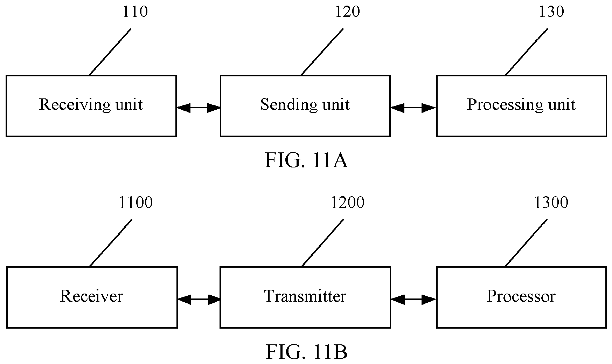

Referring to FIG. 11A, in this embodiment of the present invention not falling under the scope of the claims, a schematic diagram of an MME is provided. The MME includes a receiving unit 110 and a sending unit 120.

The receiving unit 110 is configured to receive a notification message sent by a second base station, where the notification message is used to notify the MME that a terminal is currently in an inactive state, and the terminal performs reselection to a cell controlled by the second base station.

The sending unit 120 is configured to send a paging message to the second base station according to the notification message.

Further, the MME further includes a processing unit 130, configured to transfer a data link of an S1 interface of the terminal to the second base station; and
the sending unit 120 is further configured to send a context information release message of the terminal to a first base station.

Referring to FIG. 11B, in this embodiment of the present invention not falling under the scope of the claims, a schematic diagram of an

MME is provided. The MME includes a receiver 1100 and a transmitter 1200.

The receiver 1100 is configured to receive a notification message sent by a second base station, where the notification message is used to notify the MME that a terminal is currently in an inactive state, and the terminal performs reselection to a cell controlled by the second base station.

The transmitter 1200 is configured to send a paging message to the second base station according to the notification message.

It should be noted that, the receiver 1100 is further configured to perform another operation performed by the receiving unit 110, and the transmitter 1200 is further configured to perform another operation performed by the sending unit 120. The second base station further includes a processor 1300, configured to perform an operation performed by the processing unit 130.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept.

## Claims

1. A radio resource control RRC connection releasing method, comprising:
receiving (100), by a terminal, a deactivation indication message sent by a first base station, wherein the deactivation indication message carries indication information related to mobility control of the terminal, and the first base station is a serving base station of the terminal; and
releasing (110), by the terminal, an RRC connection according to the deactivation indication message, reserving (110) context information of the terminal, and entering (110) an inactive state,
wherein the indication information is used to indicate a cell or base station that is preferred when the terminal in the inactive state performs cell reselection.

2. The method according to claim 1, wherein after the entering (110), by the terminal, an inactive state, the method further comprises:
when the terminal determines that a preset condition is met, sending (600), by the terminal, an activation request message to the first base station, wherein the activation request message carries source cell information and terminal identifier information used to identify an identity of the terminal;
receiving (620), by the terminal, an activation message sent by the first base station, and recovering a context according to the activation message; and
sending (630), by the terminal, an activation complete message to the first base station, and entering a connected state.

3. The method according to claim 2, wherein that the terminal determines that a preset condition is met comprises:
the terminal determines that a paging message is received; or
the terminal determines that uplink data arrives; or
the terminal needs to perform a tracking area update TAU.

4. The method according to claim 2 or 3, wherein after the receiving (620), by the terminal, an activation message sent by the first base station, the method further comprises:
deriving, by the terminal, a key based on information about a cell that initiates activation and the context information reserved by the terminal; and
communicating, by the terminal, with the first base station based on the key.

5. The method according to any one of claims 1 to 4, wherein the deactivation indication message further carries context validity period information of the terminal; and
after the receiving (100), by a terminal, a deactivation indication message, the method further comprises:
starting, by the terminal, a context validity period timer, and if the context validity period timer times out, releasing the context information of the terminal.

6. A radio resource control RRC connection releasing method, comprising:
determining (200), by a first base station, that a preset condition is met; and
after determining that the preset condition is met,
sending (210), by the first base station, a deactivation indication message to a terminal, and
reserving, by the first base station, context information of the terminal, wherein the deactivation indication message carries indication information related to mobility control of the terminal, and the first base station is a serving base station of the terminal,
wherein the indication information is used to indicate a cell or base station that is preferred when the terminal in the inactive state performs cell reselection.

7. The method according to claim 6, wherein the determining, by a first base station, that a preset condition is met comprises:
determining (200), by the first base station, that an inactivity timer times out; or
receiving (500), by the first base station, a deactivation request message sent by the terminal, wherein the deactivation request message is used to request the first base station to deactivate the terminal.

8. A terminal, comprising:
a receiving unit (80), configured to receive a deactivation indication message sent by a first base station, wherein the deactivation indication message carries indication information related to mobility control of the terminal, and the first base station is a serving base station of the terminal; and
a processing unit (81), configured to: release an RRC connection according to the deactivation indication message received by the receiving unit, reserve context information of the terminal, and enter an inactive state,
wherein the indication information is used to indicate a cell or base station that is preferred when the terminal in the inactive state performs cell reselection.

9. The terminal according to claim 8, wherein the processing unit is further configured to determine that a preset condition is met;
the terminal further comprises a sending unit (82), configured to: when the processing unit (81) determines that the preset condition is met, send an activation request message to the first base station, wherein the activation request message carries source cell information and terminal identifier information used to identify an identity of the terminal;
the receiving unit (80) is further configured to receive an activation message sent by the first base station;
the processing unit (81) is further configured to recover a context according to the activation message; and
the sending unit (82) is further configured to send an activation complete message to the first base station, and enter a connected state.

10. The terminal according to claim 9, wherein that the processing unit (81) determines that a preset condition is met is specifically:
it is determined that a paging message is received; or
it is determined that uplink data arrives; or
a tracking area update TAU needs to be performed.

11. The terminal according to claim 9 or 10, wherein the processing unit (81) is further configured to: derive a key based on information about a cell that initiates activation and the context information reserved by the terminal; and communicate with the base station based on the key.

12. The terminal according to any one of claims 8 to 11, wherein the deactivation indication message further carries context validity period information of the terminal; and
the processing unit (81) is further configured to: start a context validity period timer, and if the context validity period timer times out, release the context information of the terminal.

13. A first base station, comprising:
a processing unit, configured to determine that a preset condition is met; and
a sending unit (91), configured to: after the processing unit determines that the preset condition is met, send a deactivation indication message to a terminal, wherein
the processing unit (90) is further configured to reserve context information of the terminal, and
the deactivation indication message carries indication information related to mobility control of the terminal, and the first base station is a serving base station of the terminal,
wherein the indication information is used to indicate a cell or base station that is preferred when the terminal in the inactive state performs cell reselection.

14. The first base station according to claim 13, further comprising a receiving unit (92), configured to receive a deactivation request message sent by the terminal; and
that the processing unit (90) determines that a preset condition is met is specifically:
determining that an inactivity timer times out; or
receiving, by the receiving unit, a deactivation request message sent by the terminal, wherein the deactivation request message is used to request the first base station to deactivate the terminal.

## Patentansprüche

1. Verfahren zur Freigabe einer Funkressourcensteuerungs(RRC)-Verbindung, das Folgendes umfasst:
Empfangen (100), durch ein Endgerät, einer Deaktivierungsangabemeldung, die durch eine erste Basisstation gesendet wird, wobei die Deaktivierungsangabemeldung Anzeigeinformationen enthält, die sich auf die Mobilitätssteuerung des Endgerätes beziehen, und die erste Basisstation eine bedienende Basisstation des Endgerätes ist; und
Freigeben (110), durch das Endgerät, einer RRC-Verbindung gemäß der Deaktivierungsangabemeldung, Reservieren (110) von Kontextinformationen des Endgerätes und Eintreten (110) in einen inaktiven Zustand,
wobei die Anzeigeinformationen verwendet werden, um eine Zelle oder Basisstation anzugeben, die bevorzugt wird, wenn das Endgerät in dem inaktiven Zustand eine Zellenwiederauswahl durchführt.

2. Verfahren gemäß Anspruch 1, wobei das Verfahren nach dem Eintritt (110), durch das Endgerät, in einen inaktiven Zustand ferner Folgendes umfasst:
wenn das Endgerät feststellt, dass eine vorgegebene Bedingung erfüllt ist,
Senden (600), durch das Endgerät, einer Aktivierungsanforderungsmeldung an die erste Basisstation, wobei die Aktivierungsanforderungsmeldung Quellzelleninformationen und
Endgeräte-Bezeichnerinformationen enthält, die verwendet werden, um eine Identität des Endgerätes zu identifizieren;
Empfangen (620), durch das Endgerät, einer von der ersten Basisstation gesendeten Aktivierungsmeldung und Wiederherstellen eines Kontextes gemäß der Aktivierungsmeldung; und
Senden (630), durch das Endgerät, einer Aktivierungsabschlussmeldung an die erste Basisstation, und Eintreten in einen verbundenen Zustand.

3. Verfahren gemäß Anspruch 2, wobei das Feststellen durch das Endgerät, dass eine vorgegebene Bedingung erfüllt ist, Folgendes umfasst:
das Endgerät stellt fest, dass eine Funkrufmeldung empfangen wird; oder
das Endgerät stellt fest, dass Uplink-Daten eintreffen; oder
das Endgerät muss eine Verfolgungsbereichsaktualisierung (TAU) durchführen.

4. Verfahren gemäß Anspruch 2 oder 3, wobei nach dem Empfangen (620), durch das Endgerät, einer von der ersten Basisstation gesendeten Aktivierungsmeldung das Verfahren ferner Folgendes umfasst:
Ableiten, durch das Endgerät, eines Schlüssels basierend auf Informationen über eine Zelle, die die Aktivierung auslöst, und den vom Endgerät reservierten Kontextinformationen; und
Kommunizieren, durch das Endgerät, mit der ersten Basisstation basierend auf dem Schlüssel.

5. Verfahren gemäß einem der Ansprüche 1 bis 4, wobei die Deaktivierungsangabemeldung ferner Kontext-Gültigkeitsdauerinformationen des Endgerätes enthält; und
das Verfahren nach dem Empfangen (100), durch ein Endgerät, einer Deaktivierungsangabemeldung, ferner Folgendes umfasst:
Starten, durch das Endgerät, eines Kontext-Gültigkeitsdauerzeitgebers, und falls der Kontext-Gültigkeitsdauerzeitgeber abläuft, Freigeben der Kontextinformationen des Endgerätes.

6. Verfahren zur Freigabe einer Funkressourcensteuerungs(RRC)-Verbindung, das Folgendes umfasst:
Feststellen (200), durch eine erste Basisstation, dass eine vorgegebene Bedingung erfüllt ist; und
nach dem Feststellen, dass die vorgegebene Bedingung erfüllt ist,
Senden (210), durch die erste Basisstation, einer Deaktivierungsangabemeldung an ein Endgerät, und
Reservieren, durch die erste Basisstation, von Kontextinformationen des Endgerätes,
wobei die Deaktivierungsangabemeldung Anzeigeinformationen enthält, die sich auf die Mobilitätssteuerung des Endgerätes beziehen, und die erste Basisstation eine bedienende Basisstation des Endgerätes ist,
wobei die Anzeigeinformationen verwendet werden, um eine Zelle oder Basisstation anzugeben, die bevorzugt wird, wenn das Endgerät in dem inaktiven Zustand eine Zellenwiederauswahl durchführt.

7. Verfahren gemäß Anspruch 6, wobei das Feststellen, durch eine erste Basisstation, dass eine vorgegebene Bedingung erfüllt ist, Folgendes umfasst:
Feststellen (200), durch die erste Basisstation, dass ein Inaktivitätszeitgeber abgelaufen ist; oder
Empfangen (500), durch die erste Basisstation, einer Deaktivierungsanforderungsmeldung, die durch das Endgerät gesendet wurde, wobei die Deaktivierungsanforderungsmeldung verwendet wird, um die erste Basisstation aufzufordern, das Endgerät zu deaktivieren.

8. Endgerät, das Folgendes umfasst:
eine Empfangseinheit (80), die dazu ausgebildet ist, eine von einer ersten Basisstation gesendete Deaktivierungsangabemeldung zu empfangen, wobei die Deaktivierungsangabemeldung Anzeigeinformationen enthält, die sich auf die Mobilitätssteuerung des Endgerätes beziehen, und die erste Basisstation eine bedienende Basisstation des Endgerätes ist; und
eine Verarbeitungseinheit (81), die für Folgendes ausgebildet ist:
Freigeben einer RRC-Verbindung gemäß der von der Empfangseinheit empfangenen Deaktivierungsangabemeldung, Reservieren von Kontextinformationen des Endgerätes und Eintreten in einen inaktiven Zustand,
wobei die Anzeigeinformationen verwendet werden, um eine Zelle oder Basisstation anzugeben, die bevorzugt wird, wenn das Endgerät in dem inaktiven Zustand eine Zellenwiederauswahl durchführt.

9. Endgerät gemäß Anspruch 8, wobei die Verarbeitungseinheit ferner dazu ausgebildet ist, festzustellen, dass eine vorgegebene Bedingung erfüllt ist;
das Endgerät ferner eine Sendeeinheit (82) aufweist, die für Folgendes ausgebildet ist:
wenn die Verarbeitungseinheit (81) feststellt, dass die vorgegebene Bedingung erfüllt ist,
Senden einer Aktivierungsanforderungsmeldung an die erste Basisstation, wobei die Aktivierungsanforderungsmeldung Quellzelleninformationen und Endgeräte-Bezeichnerinformationen enthält, die verwendet werden, um eine Identität des Endgerätes zu identifizieren;
die Empfangseinheit (80) ferner dazu ausgebildet ist, eine von der ersten Basisstation gesendete Aktivierungsmeldung zu empfangen,
die Verarbeitungseinheit (81) ferner dazu ausgebildet ist, einen Kontext gemäß der Aktivierungsmeldung wiederherzustellen; und
die Sendeeinheit (82) ferner dazu ausgebildet ist, eine Aktivierungsabschlussmeldung an die erste Basisstation zu senden und in einen verbundenen Zustand einzutreten.

10. Endgerät gemäß Anspruch 9, wobei das Feststellen durch die Verarbeitungseinheit (81), dass eine vorgegebene Bedingung erfüllt ist, insbesondere Folgendes beinhaltet:
es wird festgestellt, dass eine Funkrufmeldung empfangen wird; oder
es wird festgestellt, dass Uplink-Daten eintreffen; oder
eine Verfolgungsbereichsaktualisierung (TAU) muss durchgeführt werden.

11. Endgerät nach Anspruch 9 oder 10, wobei die Verarbeitungseinheit (81) ferner für Folgendes ausgebildet ist:
Ableiten eines Schlüssels basierend auf Informationen über eine Zelle, die die Aktivierung auslöst, und den vom Endgerät reservierten Kontextinformationen; und
Kommunizieren mit der Basisstation basierend auf dem Schlüssel.

12. Endgerät gemäß einem der Ansprüche 8 bis 11, wobei die Deaktivierungsangabemeldung ferner Kontext-Gültigkeitsdauerinformationen des Endgerätes enthält; und
die Verarbeitungseinheit (81) ferner für Folgendes ausgelegt ist: Starten eines Kontext-Gültigkeitsdauerzeitgebers, und falls der Kontext-Gültigkeitsdauerzeitgeber abläuft, Freigeben der Kontextinformationen des Endgerätes.

13. Erste Basisstation, die Folgendes umfasst:
eine Verarbeitungseinheit, die dazu ausgebildet ist, festzustellen, dass eine vorgegebene Bedingung erfüllt ist; und
eine Sendeeinheit (91), die für Folgendes ausgebildet ist:
nachdem die Verarbeitungseinheit feststellt, dass die vorgegebene Bedingung erfüllt ist,
Senden einer Deaktivierungsangabemeldung an ein Endgerät, wobei die Verarbeitungseinheit (90) ferner dazu ausgebildet ist, Kontextinformationen des Endgerätes zu reservieren, und
die Deaktivierungsangabemeldung Anzeigeinformationen enthält, die sich auf die Mobilitätssteuerung des Endgerätes beziehen, und die erste Basisstation eine bedienende Basisstation des Endgerätes ist,
wobei die Anzeigeinformationen verwendet werden, um eine Zelle oder Basisstation anzugeben, die bevorzugt wird, wenn das Endgerät in dem inaktiven Zustand eine Zellwiederauswahl durchführt.

14. Erste Basisstation gemäß Anspruch 13, die ferner eine Empfangseinheit (92) aufweist, die dazu ausgebildet ist, eine durch das Endgerät gesendete Deaktivierungsanforderungsmeldung zu empfangen; und
das Feststellen durch die Verarbeitungseinheit (90), dass eine vorgegebene Bedingung erfüllt ist, insbesondere Folgendes beinhaltet:
Feststellen, dass ein Inaktivitätszeitgeber abläuft; oder
Empfangen, durch die Empfangseinheit, einer Deaktivierungsanforderungsmeldung, die durch das Endgerät gesendet wurde, wobei die Deaktivierungsanforderungsmeldung verwendet wird, um die erste Basisstation aufzufordern, das Endgerät zu deaktivieren.

## Revendications

1. Procédé de libération de connexion de gestion des ressources radio, RRC, comprenant :
recevoir (100), par un terminal, un message d'indication de désactivation envoyé par une première station de base, dans lequel le message d'indication de désactivation transporte des informations d'indication liées à une commande de mobilité du terminal, et la première station de base est une station de base de desserte du terminal ; et
libérer (110), par le terminal, une connexion RRC en fonction du message d'indication de désactivation, réserver (110) des informations de contexte du terminal, et entrer (110) dans un état inactif,
dans lequel les informations d'indication sont utilisées pour indiquer une cellule ou une station de base qui est préférée lorsque le terminal dans l'état inactif effectue une resélection de cellule.

2. Procédé selon la revendication 1, après l'entrée (110), par le terminal, dans un état inactif, le procédé comprenant en outre :
lorsque le terminal détermine qu'une condition prédéfinie est remplie, envoyer (600), par le terminal, un message de demande d'activation à la première station de base, dans lequel le message de demande d'activation transporte des informations de cellule source et des informations d'identificateur de terminal utilisées pour identifier une identité du terminal ;
recevoir (620), par le terminal, un message d'activation envoyé par la première station de base, et récupérer un contexte en fonction du message d'activation ; et
envoyer (630), par le terminal, un message de fin d'activation à la première station de base,
et entrer dans un état connecté.

3. Procédé selon la revendication 2, dans lequel le fait que le terminal détermine qu'une condition prédéfinie est remplie comprend le fait que :
le terminal détermine qu'un message de radiomessagerie est reçu ; ou
le terminal détermine que des données de liaison montante arrivent ; ou
le terminal doit effectuer une mise à jour de zone de suivi, TAU.

4. Procédé selon la revendication 2 ou 3, après la réception (620), par le terminal, d'un message d'activation envoyé par la première station de base, le procédé comprenant en outre :
dériver, par le terminal, une clé sur la base d'informations concernant une cellule qui initie l'activation et des informations de contexte réservées par le terminal ; et
communiquer, par le terminal, avec la première station de base sur la base de la clé.

5. Procédé selon l'une quelconque des revendications 1 à 4, le message d'indication de désactivation transportant en outre des informations de période de validité de contexte du terminal ; et
après la réception (100), par un terminal, d'un message d'indication de désactivation, le procédé comprenant en outre :
démarrer, par le terminal, une minuterie de période de validité de contexte, et si la minuterie de période de validité de contexte arrive à expiration, libérer les informations de contexte du terminal.

6. Procédé de libération de connexion de gestion des ressources radio, RRC, comprenant :
déterminer (200), par une première station de base, qu'une condition prédéfinie est remplie ; et
après avoir déterminé que la condition prédéfinie est remplie,
envoyer (210), par la première station de base, un message d'indication de désactivation à un terminal, et
réserver, par la première station de base, des informations de contexte du terminal, dans lequel le message d'indication de désactivation transporte des informations d'indication liées à une commande de mobilité du terminal, et la première station de base est une station de base de desserte du terminal,
dans lequel les informations d'indication sont utilisées pour indiquer une cellule ou une station de base qui est préférée lorsque le terminal dans l'état inactif effectue une resélection de cellule.

7. Procédé selon la revendication 6, dans lequel la détermination, par une première station de base, qu'une condition prédéfinie est remplie comprend :
déterminer (200), par la première station de base, qu'une minuterie d'inactivité arrive à expiration ; ou
recevoir (500), par la première station de base, un message de demande de désactivation envoyé par le terminal, dans lequel le message de demande de désactivation est utilisé pour demander à la première station de base de désactiver le terminal.

8. Terminal, comprenant :
une unité de réception (80), configurée pour recevoir un message d'indication de désactivation envoyé par une première station de base, dans lequel le message d'indication de désactivation transporte des informations d'indication liées à une commande de mobilité du terminal, et la première station de base est une station de base de desserte du terminal ; et
une unité de traitement (81), configurée pour : libérer une connexion RRC en fonction du message d'indication de désactivation reçu par l'unité de réception, réserver des informations de contexte du terminal, et entrer dans un état inactif,
dans lequel les informations d'indication sont utilisées pour indiquer une cellule ou une station de base qui est préférée lorsque le terminal dans l'état inactif effectue une resélection de cellule.

9. Terminal selon la revendication 8, l'unité de traitement étant en outre configurée pour déterminer qu'une condition prédéfinie est remplie ;
le terminal comprenant en outre une unité d'envoi (82), configurée pour : lorsque l'unité de traitement (81) détermine que la condition prédéfinie est remplie, envoyer un message de demande d'activation à la première station de base, dans lequel le message de demande d'activation transporte des informations de cellule source et des informations d'identificateur de terminal utilisées pour identifier une identité du terminal ;
l'unité de réception (80) étant en outre configurée pour recevoir un message d'activation envoyé par la première station de base ;
l'unité de traitement (81) étant en outre configurée pour récupérer un contexte en fonction du message d'activation ; et
l'unité d'envoi (82) étant en outre configurée pour envoyer un message de fin d'activation à la première station de base, et entrer dans un état connecté.

10. Terminal selon la revendication 9, dans lequel le fait que l'unité de traitement (81) détermine qu'une condition prédéfinie est remplie est spécifiquement le fait que :
il est déterminé qu'un message de radiomessagerie est reçu ; ou
il est déterminé que des données de liaison montante arrivent ; ou
une mise à jour de zone de suivi, TAU, doit être effectuée.

11. Terminal selon la revendication 9 ou 10, dans lequel l'unité de traitement (81) est en outre configurée pour : dériver une clé sur la base d'informations concernant une cellule qui initie l'activation et des informations de contexte réservées par le terminal ; et communiquer avec la station de base sur la base de la clé.

12. Terminal selon l'une quelconque des revendications 8 à 11, dans lequel le message d'indication de désactivation transporte en outre des informations de période de validité de contexte du terminal ; et
l'unité de traitement (81) est en outre configurée pour : démarrer une minuterie de période de validité de contexte, et si la minuterie de période de validité de contexte arrive à expiration, libérer les informations de contexte du terminal.

13. Première station de base, comprenant :
une unité de traitement, configurée pour déterminer qu'une condition prédéfinie est remplie ; et
une unité d'envoi (91), configurée pour : après que l'unité de traitement a déterminé que la condition prédéfinie est remplie, envoyer un message d'indication de désactivation à un terminal,
l'unité de traitement (90) étant en outre configurée pour réserver des informations de contexte du terminal, et
le message d'indication de désactivation transportant des informations d'indication liées à une commande de mobilité du terminal, et la première station de base étant une station de base de desserte du terminal,
dans laquelle les informations d'indication sont utilisées pour indiquer une cellule ou une station de base qui est préférée lorsque le terminal dans l'état inactif effectue une resélection de cellule.

14. Première station de base selon la revendication 13, comprenant en outre une unité de réception (92), configurée pour recevoir un message de demande de désactivation envoyé par le terminal ; et
le fait que l'unité de traitement (90) détermine qu'une condition prédéfinie est remplie est spécifiquement :
déterminer qu'une minuterie d'inactivité arrive à expiration ; ou
recevoir, par l'unité de réception, un message de demande de désactivation envoyé par le terminal, dans laquelle le message de demande de désactivation est utilisé pour demander à la première station de base de désactiver le terminal.
